# EUROPÄISCHE PATENTSCHRIFT

(11) **EP 0 665 349 B1**
(45) Veröffentlichungstag und Bekanntmachung des Hinweises auf die Patenterteilung: **19.11.1997**
(21) Anmeldenummer: 95101043.8
(22) Anmeldetag: 26.01.1995
(51) Int. Cl.: E05B 1/00, E05B 13/00, E05B 5/00

(54) **Verschluss**
Lock
Serrure

(30) Priorität: 28.01.1994 DE 4402479
(43) Veröffentlichungstag der Anmeldung: 02.08.1995
(73) Patentinhaber: Steinbach & Vollmann GmbH & Co., 42579 Heiligenhaus (DE)
(72) Erfinder:
(74) Vertreter: Stenger, Watzke & Ring Patentanwälte

(56) Entgegenhaltungen:
- EP-A- 0 155 543
- EP-A- 0 261 267
- FR-A- 2 657 916
- GB-A- 423 125
- GB-A- 2 112 849

## Beschreibung

Die Erfindung betrifft einen insbesondere für aus Blech hergestellte Schaltschranktüren bestimmten Verschluß mit einem auf der Türaußenseite anzuordnenden Gehäuse, in dem ein über eine Antriebswelle mit dem Getriebe eines Stangenschlosses verbindbares Antriebsteil drehbar gelagert ist, an dem ein Handgriff um eine rechtwinklig zur Drehachse des Antriebsteils verlaufende Achse aus einer Aussparung im Gehäuse ausklappbar gelagert ist, wobei der Handgriff in der eingeklappten, ein Verdrehen verhindernden Ruhestellung gegen Herausklappen, vorzugsweise durch ein im Gehäuse angeordnetes Schloß, verriegelbar ist.

Derartige Verschlüsse sind in verschiedenen Ausführungen bekannt.

Der Erfindung liegt die **Aufgabe** zugrunde, einen Verschluß der voranstehend beschriebenen Art zu schaffen, der preisgünstig herstellbar und einfach zu bedienen ist und eine hohe Funktionssicherheit aufweist.

Die **Lösung** dieser Aufgabenstellung durch die Erfindung ist dadurch gekennzeichnet, daß der Handgriff in einem das Antriebsteil diagonal durchsetzenden Kanal zwischen einer aus dem Antriebsteil herausgezogenen Arbeitsstellung und einer in das Gehäuse eingeschobenen Ruhestellung verschiebbar gelagert und am innenliegenden Ende mit mindestens einem die Klappachse bildenden Lagerstift versehen ist, um den der Handgriff in der herausgezogenen Ar beitsstellung klappbar am Antriebsteil gehalten ist.

Der erfindungsgemäße Verschluß besitzt neben einer einfachen und damit preisgünstig herstellbaren Konstruktion den Vorteil, daß der Handgriff in seiner Ruhestellung innerhalb des auf der Türaußenseite anzuordnenden Gehäuses liegt, so daß er nicht nur raumsparend untergebracht, sondern auch vor unerwünschten Zugriffen geschützt ist, wenn der Verschluß mittels eines im Gehäuse angeordneten Schlosses abgeschlossen werden kann. In seiner aus dem Gehäuse herausgezogenen Arbeitsstellung kann der Handgriff nach vorn um einen begrenzten Schwenkwinkel ausgeklappt werden, so daß sich das auf der Innenseite des Türblattes angeordnete Stangenschloß auf einfache Weise betätigen läßt.

Gemäß einem weiteren bevorzugten Merkmal der Erfindung ist der Handgriff in seiner in das Gehäuse eingeschobenen Ruhestellung durch einen federbelasteten Riegel verriegelbar. Hierdurch wird sichergestellt, daß der Handgriff selbsttätig bei Überführen in seine im Gehäuse liegende Ruhestellung verriegelt wird.

Diese Verriegelung kann auf unterschiedliche Weise aufgehoben werden. Bei der einfachsten Ausgestaltung ist der Riegel durch ein aus dem Gehäuse herausragendes Betätigungsteil unmittelbar von Hand auslösbar. Sofern diese Auslösung nur unter Verwendung eines bestimmten Werkzeuges möglich sein soll, wird gemäß einem weiteren Merkmal der Erfindung vorgeschlagen, die Stirnfläche des Riegels innerhalb der Oberfläche des Gehäuses anzuordnen, so daß der Riegel nur mit Hilfe eines Werkzeuges betätigt werden kann. Schließlich ist es erfindungsgemäß möglich, den Riegel durch ein im Gehäuse angeordnetes Schloß auszulösen, so daß eine derartige Auslösung nur durch eine berechtigte Person erfolgen kann, die im Besitz des zugehörigen Schlüssels ist. Bei einer bevorzugten Ausbildung wird das Schloß in dem dem Antriebsteil angewandten Ende des Gehäuses angeordnet.

Um eine Verriegelung des sich in der Ruhestellung befindlichen Handgriffes auf besonders einfache Weise zu erzielen, ist der Riegel gemäß einem weiteren bevorzugten Merkmal der Erfindung mit mindestens einer mit dem Lagerstift zusammenwirkenden Auflaufkurve und anschließenden Rastvertiefung versehen. Der der Verschwenkung des Handgriffes am drehbaren Antriebsteil dienende Lagerstift wird auf diese Weise gleichzeitig als Verriegelungselement des Handgriffes verwendet.

Bei einer bevorzugten Ausführungsform wirkt der Riegel mittig mit einer vom Lagerstift durchdrungenen Aussparung im Handgriff zusammen. Alternativ kann der Riegel auch gabelförmig ausgebildet sein und mit den seitlich aus dem Handgriff hervorstehenden Enden des Lagerstiftes zusammenwirken.

Bei der letztgenannten Ausbildung ist es vorteilhaft, wenn gemäß einem weiteren bevorzugten Merkmal der Erfindung der gabelförmige Riegel in einer das Schloß U-förmig umgebenden Aussparung in der Art einer Wippe gelagert und durch einen das Schloß im Gehäuse haltenden Gewindestift gegen Herausfallen gesichert ist. Hierdurch ergibt sich eine besonders einfache und funktionssichere Ausgestaltung, bei der im Gehäuse ausgeformte Lagerflächen für eine definierte Schwenklagerung des gabelförmigen Riegels sorgen. Auch der Gewindestift übernimmt hierbei außer einer Festlegung des Schlosses im Gehäuse eine zweite Funktion, nämlich die unverlierbare Halterung des gabelförmigen Riegels im Gehäuse.

Wenn gemäß einem weiteren bevorzugten Merkmal der Erfindung das freie Ende des Handgriffes in der Ruhestellung nahezu vollständig innerhalb des Antriebsteiles liegt, ergibt sich der Vorteil, daß dieses freie Ende des Handgriffes keinen Angriff zum gewaltsamen Herausziehen des Handgriffes aus dem Antriebsteil bzw. dem Gehäuse bietet, so daß sich eine sehr sichere und gegen unbefugtes Betätigen geschützte Unterbringung des Handgriffes im Gehäuse ergibt.

Mit der Erfindung wird weiterhin vorgeschlagen, das Gehäuse mit zwei von seiner Unterseite hervorstehenden, in Aussparungen des Türblattes eingreifenden Vorsprüngen zur Festlegung am Türblatt auszubilden, so daß sich eine sichere Positionierung und Halterung des Verschlusses am Türblatt ergibt. Bei einer bevorzugten Ausführung ist im Bereich des einen Vorsprunges ein das Türblatt hintergreifender Haken und im Bereich des anderen Vorsprunges ein Lagerbolzen angeordnet, auf dem eine verdrehbare Riegellasche angeordnet ist. Diese Riegellasche wird nach dem Einsetzen des auf der Türaußenseite anzuordnenden Gehäuses in die Türblatt-Aussparungen von der Innenseite des Türblattes her verdreht, so daß sich eine sichere Festlegung des Verschlusses auf der Türaußenseite ergibt. Durch anschließendes Aufsetzen des Stangenschlosses auf das Antriebsteil des erfindungsgemäßen Verschlusses wird ein unerwünschtes Verdrehen des Riegels verhindert, so daß sich nicht nur eine einfache Montage des erfindungsgemäßen Verschlusses, sondern eine sichere Halterung dieses Verschlusses am Türblatt ergeben.

Auf der Zeichnung sind zwei Ausführungsbeispiele des erfindungsgemäßen Verschlusses dargestellt, und zwar zeigen:
- Fig. 1: eine Vorderansicht eines ersten Ausführungsbeispieles des Verschlusses,
- Fig. 2: eine Seitenansicht des Verschlusses nach Fig. 1,
- Fig. 3: eine rückwärtige Ansicht des Verschlusses nach den Fig. 1 und 2,
- Fig. 4: einen Längsschnitt durch den Verschluß gemäß der Schnittlinie IV-IV in Fig. 3,
- Fig. 5: einen Detailschnitt gemäß der Schnittlinie V-V in Fig. 4, jedoch mit ausgezogenem, aber nicht verschwenktem Handgriff,
- Fig. 6: einen Querschnitt gemäß der Schnittlinie VI-VI in Fig. 5,
- Fig. 7: einen der Fig. 4 entsprechenden Längsschnitt durch ein zweites Ausführungsbeispiel des Verschlusses und
- Fig. 8: eine rückwärtige Ansicht des Verschlusses gemäß Fig. 7.

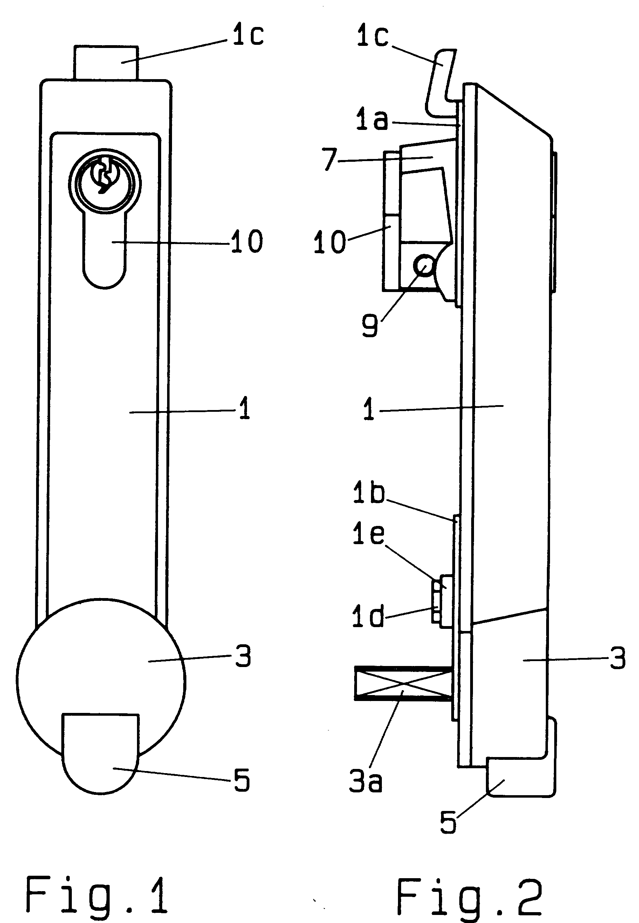

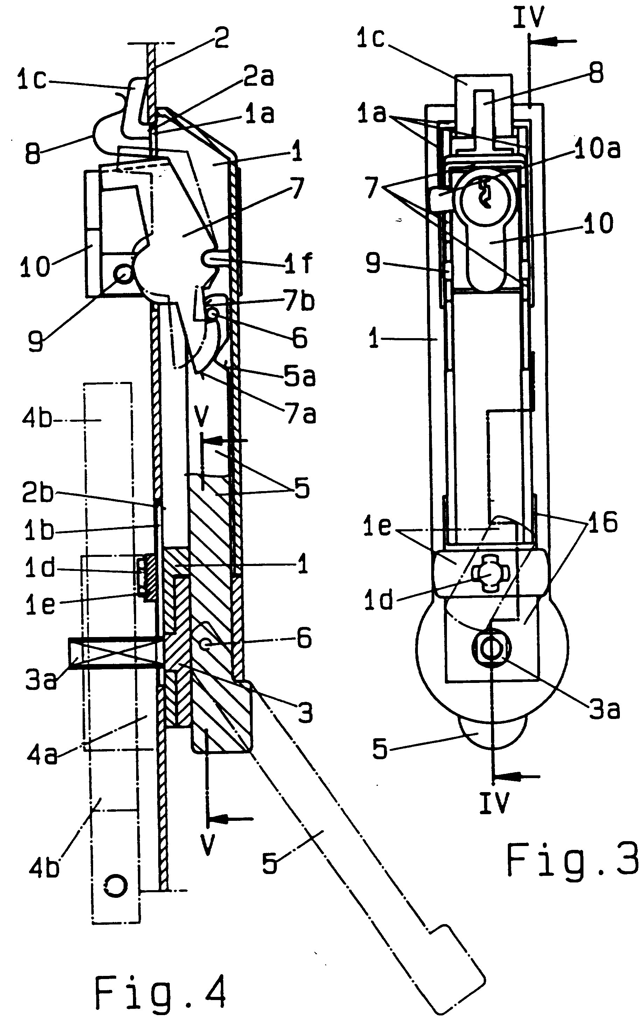

Das in den Fig. 1 bis 6 dargestellte erste Ausführungsbeispiel des Verschlusses umfaßt ein längliches Gehäuse 1, das an der Außenseite eines in Fig. 4 im Schnitt dargestellten Türblattes 2 angeordnet wird, das zu diesem Zweck mit zwei übereinanderliegenden, rechteckigen Aussparungen 2a und 2b versehen ist. Zur exakten Festlegung des Gehäuses 1 am Türblatt 2 ist das Gehäuse 1 an seiner Unterseite mit zwei hervorstehenden Vorsprüngen 1a und 1b versehen, die in die Aussparung 2a bzw. 2b eingreifen, wie Fig. 4 erkennen läßt.

Zur Festlegung des Gehäuses 1 am Türblatt 2 ist das Gehäuse 1 an seinem einen Ende im Bereich des Vorsprunges 1a mit einem das Türblatt 2 hintergreifenden Haken 1c versehen. Im Bereich des Vorsprunges 1b ist an der Unterseite des Gehäuses 1 ein Lagerbolzen 1d angeordnet, auf dem eine Riegellasche 1e verdrehbar gelagert ist. Diese Riegellasche 1e wird gemäß Fig. 3 nach dem Einsetzen des Gehäuses 1 in die Aussparungen 2a und 2b des Türblattes 2 aus der mit strichpunktierten Linien dargestellten Ausgangsstellung in die mit ausgezogenen Linien gezeichnete Stellung verdreht, in der die Riegellasche 1e quer zur Längsrichtung des Gehäuses 1 liegt und mit ihren Enden das Türblatt 2 zu beiden Seiten der Aussparung 2b hintergreift. Auf diese Weise erfolgt eine sichere Festlegung des Gehäuses 1 am Türblatt 2.

Im Bereich des Vorsprunges 1b ist am Ende des Gehäuses 1 ein Antriebsteil 3 drehbar gelagert, das mit einem Antriebsvierkant 3a die Rückseite des Gehäuses 1 durchgreift und in die Aussparung 2b des Türblattes 2 hineinragt. Dies ist am besten in Fig. 4 zu erkennen. Diese Darstellung zeigt weiterhin, daß der Antriebsvierkant 3a des Antriebsteiles 3 zur Betätigung eines auf der Innenseite des Türblattes 2 angeordneten Stangenschlosses dient, das mit strichpunktierten Linien dargestellt ist. Dieses Stangenschloß umfaßt ein Getriebegehäuse 4a und mindestens eine parallel zum Türblatt 2 verschiebbare Verschlußstange 4b.

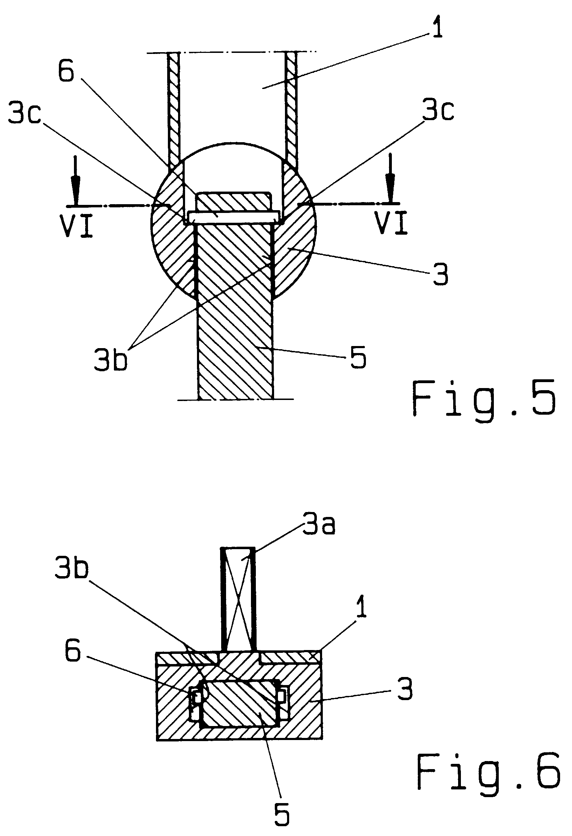

Zur Betätigung der Verschlußstange 4b des Stangenschlosses wird das Antriebsteil 3 mittels eines Handgriffes 5 gedreht, der mit ausgezogenen Linien in den Fig. 1 bis 4 in seiner Ruhestellung und zusätzlich in Fig. 4 mit strichpunktierten Linien in seiner Arbeitsstellung eingezeichnet ist. Wie insbesondere die Fig. 5 und 6 erkennen lassen, ist dieser Handgriff 5 in einem das Antriebsteil 3 diagonal durchsetzenden Kanal 3b verschiebbar gelagert. Er kann somit - wie insbesondere Fig. 4 zeigt - in seiner Ruhestellung in das Gehäuse 1 eingeschoben werden. Um das Antriebsteil 3 zur Betätigung des Stangenschlosses zu verdrehen, wird der Handgriff 5 aus dem Gehäuse 1 und dem Antriebsteil 3 herausgezogen, bis ein in sein innenliegendes Ende eingesetzter Lagerstift 6, der mit beiden Enden seitlich aus dem Handgriff 5 hervorsteht, an Anschlägen 3c des Antriebsteiles 3 anliegt. In dieser Stellung kann der Handgriff 5 nunmehr um einen begrenzten Winkel nach vorn verschwenkt bzw. ausgeklappt werden, wie dies mit strichpunktierten Linien in Fig. 4 eingezeichnet ist. Um dieses Ausklappen des Handgriffes 5 zu ermöglichen, ist er mit einer Einkerbung 5a versehen, die ebenfalls in Fig. 4 zu erkennen ist.

Um den Handgriff 5 in seiner mit ausgezogenen Linien in den Fig. 1 bis 4 dargestellten Ruhestellung innerhalb des Gehäuses 1 festzulegen, ist beim ersten Ausführungsbeispiel ein Riegel 7 vorgesehen, der gabelförmig durch ein U-förmig gebogenes Blechteil gebildet und in einer U-förmigen Aussparung des Gehäuses 1 angeordnet ist, wie insbesondere die Draufsicht auf den Riegel 7 im oberen Teil der Fig. 3 zeigt. Jeder Schenkel des gabelförmigen Riegels 7 ist mit einer Auflaufkurve 7a und anschließenden Rastvertiefung 7b versehen, die beim Ausführungsbeispiel mit den seitlich über den Handgriff 5 hervorstehenden Enden des Lagerstiftes 6 zusammenwirken und auf diese Weise den Handgriff 5 in der in das Gehäuse eingeschobenen Stellung festhalten, da der Riegel 7 in Wirkrichtung durch eine Feder 8 belastet ist, die im oberen Teil der Fig. 3 und 4 zu erkennen ist.

Um den gabelförmigen Riegel 7 in der Art einer Wippe zu lagern, besitzt das Gehäuse 1 angeformte Lageransätze 1f, auf die die beiden Schenkel des Riegels 7 mit einer entsprechenden Lageraussparung aufgesetzt sind. Gegen Herausfallen aus dem Gehäuse 1 ist der Riegel 7 durch einen Gewindestift 9 gehalten, mit dem beim Ausführungsbeispiel zugleich ein Zylinderschloß 10 im Gehäuse 1 gehalten wird. Durch die Schließnase 10a dieses Zylinderschlosses 10 wird der Riegel 7 entgegen der Kraft der Feder 8 derart verschwenkt, daß die Rastvertiefungen 7b des Riegels 7 den am Handgriff 5 angeordneten Lagerstift 6 freigeben, so daß der Handgriff 5 aus dem Gehäuse 1 und dem Antriebsteil 3 herausgezogen werden kann bzw. aufgrund seines Gewichtes nach unten heraustritt, wenn der Verschluß in senkrechter Richtung am Türblatt 2 angeordnet ist.

Bei dem ersten Ausführungsbeispiel nach den Fig. 1 bis 6 ist somit eine Entriegelung des in der Ruhestellung innerhalb des Gehäuses 1 befindlichen Handgriffes nur mit Hilfe eines zum Zylinderschloß 10 passenden Schlüssels möglich.

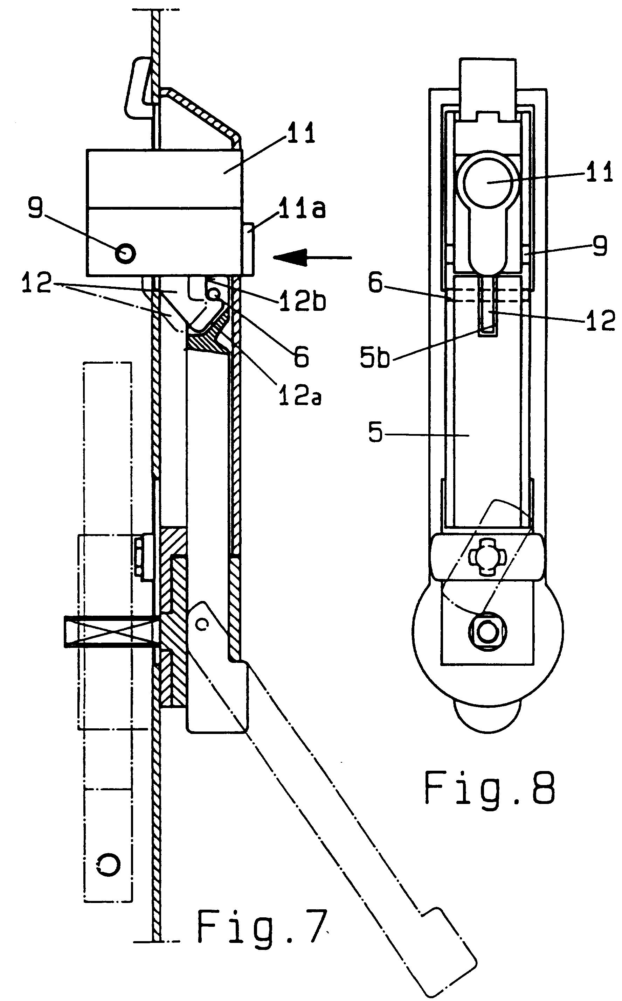

Das zweite Ausführungsbeispiel nach den Fig. 7 und 8 zeigt eine andere Art der Verriegelung des Handgriffes 5 in seiner Ruhestellung. Bei dieser zweiter. Ausführungsform ist anstelle eines Zylinderschlosses 10 ein Formstück 11 in das Gehäuse 1 eingesetzt, das ebenfalls mittels des Gewindestiftes 9 am Gehäuse 1 festgelegt wird. Im Formstück 11 ist entgegen der Kraft einer nicht dargestellten Feder ein Betätigungsteil 11a in der Art eines Druckknopfes angeordnet, das einen mittig austretenden Riegel 12 verschiebt, der in seinen beiden Endstellungen mit ausgezogenen bzw. strichpunktierten Linien in Fig. 7 eingezeichnet ist. Dieser ebenfalls mit einer Auflaufkurve 12a und einer anschließenden Rastvertiefung 12b versehene Riegel 12 hintergreift in der Ruhestellung des Handgriffes 5 den Lagerstift 6 im Bereich einer mittigen Aussparung 5b, die am besten in Fig. 8 zu erkennen ist. Bei dieser Ausgestaltung erfolgt eine Entriegelung des in der Ruhestellung befindlichen Handgriffes 5 durch Eindrücken des Betätigungsteiles 11a in das Formstück 11. Sofern ein solches Eindrücken nur mit Hilfe eines bestimmten Werkstückes möglich sein soll, liegt die Stirnfläche des Betätigungsteils 11a innerhalb der Kontur des Formstückes 11.

### Bezugszeichenliste

- 1: Gehäuse
- 1a: Vorsprung
- 1b: Vorsprung
- 1c: Haken
- 1d: Lagerbolzen
- 1e: Riegellasche
- 1f: Lageransatz
- 2: Türblatt
- 2a: Aussparung
- 2b: Aussparung
- 3: Antriebsteil
- 3a: Antriebsvierkant
- 3b: Kanal
- 3c: Anschlag
- 4a: Getriebegehäuse
- 4b: Verschlußstange
- 5: Handgriff
- 5a: Einkerbung
- 5b: Aussparung
- 6: Lagerstift
- 7: Riegel
- 7a: Auflaufkurve
- 7b: Rastvertiefung
- 8: Feder
- 9: Gewindestift
- 10: Zylinderschloß
- 10a: Schließnase
- 11: Formstück
- 11a: Betätigungsteil
- 12: Riegel
- 12a: Auflaufkurve
- 12b: Rastvertiefung

## Patentansprüche

1. Verschluß, insbesondere für aus Blech hergestellte Schaltschranktüren, mit einem auf der Türaußenseite anzuordnenden Gehäuse (1), in dem ein über eine Antriebswelle mit dem Getriebe eines Stangenschlosses (4a,4b) verbindbares Antriebsteil (3) drehbar gelagert ist, an dem ein Handgriff (5) um eine rechtwinklig zur Drehachse des Antriebsteils (3) verlaufende Achse aus einer Aussparung im Gehäuse (1) ausklappbar gelagert ist, wobei der Handgriff (5) in der eingeklappten, ein Verdrehen verhindernden Ruhestellung gegen Herausklappen, vorzugsweise durch ein im Gehäuse angeordnetes Schloß, verriegelbar ist,
**dadurch gekennzeichnet,**
daß der Handgriff (5) in einem das Antriebsteil (3) diagonal durchsetzenden Kanal (3b) zwischen einer aus dem Antriebsteil (3) herausgezogenen Arbeitsstellung und einer in das Gehäuse (1) eingeschobenen Ruhestellung verschiebbar gelagert und am innenliegenden Ende mit mindestens einem, die Klappachse bildenden Lagerstift (6) versehen ist, um den der Handgriff(5) in der herausgezogenen Arbeitsstellung klappbar am Antriebsteil (3) gehalten ist.

2. Verschluß nach Anspruch 1, dadurch gekennzeichnet, daß der Handgriff (5) in seiner in das Gehäuse (1) eingeschobenen Ruhestellung durch einen federbelasteten Riegel (7,12) verriegelbar ist.

3. Verschluß nach Anspruch 2, dadurch gekennzeichnet, daß der Riegel (12) durch ein aus dem Gehäuse (1) herausragendes Betätigungsteil (11a) von Hand auslösbar ist.

4. Verschluß nach Anspruch 3, dadurch gekennzeichnet, daß die Stirnfläche des Betätigungsteiles (11a) innerhalb der Oberfläche des Gehäuses (1) liegt.

5. Verschluß nach Anspruch 2, dadurch gekennzeichnet, daß der Riegel (7) durch ein im Gehäuse (1) angeordnetes Schloß (10) auslösbar ist.

6. Verschluß nach Anspruch 5, dadurch gekennzeichnet, daß das Schloß (10) in dem dem Antriebsteil (3) abgewandten Ende des Gehäuses (1) angeordnet ist.

7. Verschluß nach mindestens einem der Ansprüche 2 bis 6, dadurch gekennzeichnet, daß der Riegel (7,12) mit mindestens einer mit dem Lagerstift (6) zusammenwirkenden Auflaufkurve (7a,12a) und anschließenden Rastvertiefung (7b,12b) versehen ist.

8. Verschluß nach Anspruch 7, dadurch gekennzeichnet, daß der Riegel (12) mittig mit einer vom Lagerstift (6) durchdrungenen Aussparung (5b) im Handgriff (5) zusammenwirkt.

9. Verschluß nach Anspruch 7, dadurch gekennzeichnet, daß der Riegel (7) gabelförmig ausgebildet ist und mit den seitlich über den Handgriff (5) vorstehenden Enden des Lagerstiftes (6) zusammenwirkt.

10. Verschluß nach Anspruch 9, dadurch gekennzeichnet, daß der gabelför mige Riegel (7) in einer das Schloß (10) U-förmig umgebenden Aussparung in der Art einer Wippe im Gehäuse (1) gelagert und durch einen das Schloß (10) im Gehäuse (1) haltenden Gewindestift (9) gegen Herausfallen gesichert ist.

11. Verschluß nach mindestens einem der Ansprüche 1 bis 10, dadurch gekennzeichnet, daß das freie Ende des Handgriffes (5) in der Ruhestellung nahezu vollständig innerhalb des Antriebsteiles (3) liegt.

12. Verschluß nach mindestens einem der Ansprüche 1 bis 11, dadurch gekennzeichnet, daß das Gehäuse (1) mit zwei von seiner Unterseite hervorstehenden, in Aussparungen (2a,2b) des Türblattes (2) eingreifenden Vorsprüngen (1a,1b) zur Festlegung am Türblatt (2) ausgebildet ist.

13. Verschluß nach Anspruch 12, dadurch gekennzeichnet, daß im Bereich des einen Vorsprunges (1a) ein das Türblatt (2) hintergreifender Haken (1c) und im Bereich der anderen Vorsprunges (2b) ein Lagerbolzen (1d) angeordnet ist, auf dem eine verdrehbare Riegellasche (1e) angeordnet ist.

## Claims

1. Locking mechanism, in particular for switchgear-cabinet doors produced from sheet metal, having a housing (1) which is to be arranged on the outside of the door and in which there is mounted in a rotatable manner a drive part (3), which can be connected to the gear mechanism of a bar-type lock (4a, 4b) via a drive shaft and on which a handle (5) is mounted such that it can be swung out of a clearance in the housing (1) around a spindle running at right angles with respect to the axis of rotation of the drive part (3), it being possible for the handle (5), in the swung-in, rest position, in which rotation is prevented, to be locked against swinging out, preferably by a lock arranged in the housing, characterized in that the handle (5) is mounted, in a channel (3b) which passes diagonally through the drive part (3), such that it can be displaced between an operating position, in which it is drawn out of the drive part (3), and a rest position, in which it is pushed into the housing part (1), and said handle is provided, at the inner end, with at least one swing-spindle-forming bearing pin (6), which, when the handle (5) is in the drawn-out, operating position, retains the latter such that it can swing on the drive part (3).

2. Locking mechanism according to Claim 1, characterized in that, in its rest position, in which it is pushed into the housing (1), the handle (5) can be locked by a spring-loaded catch (7, 12).

3. Locking mechanism according to Claim 2, characterized in that the catch (12) can be released manually by way of an actuating part (11a) projecting out of the housing (1).

4. Locking mechanism according to Claim 3, characterized in that the end face of the actuating part (11a) is located within the surface of the housing (1).

5. Locking mechanism according to Claim 2, characterized in that the catch (7) can be released by a lock (10) arranged in the housing (1).

6. Locking mechanism according to Claim 5, characterized in that the lock (10) is arranged in that end of the housing (1) which is remote from the drive part (3).

7. Locking mechanism according to at least one of Claims 2 to 6, characterized in that the catch (7, 12) is provided with at least one run-on curve (7a, 12a), which interacts with the bearing pin (6), and an adjoining latching depression (7b, 12b).

8. Locking mechanism according to Claim 7, characterized in that the catch (12) interacts centrally with a clearance (5b) which is located in the handle (5) and through which the bearing pin (6) passes.

9. Locking mechanism according to Claim 7, characterized in that the catch (7) is designed in the form of a fork and interacts with the ends of the bearing pin (6), said ends projecting laterally beyond the handle (5).

10. Locking mechanism according to Claim 9, characterized in that the fork-like catch (7) is mounted in the housing (1), in a clearance enclosing the lock (10) in a U-shaped manner, in the manner of a rocker and is secured against dropping out by virtue of a threaded pin (9), which retains the lock (10) in the housing (1).

11. Locking mechanism according to at least one of Claims 1 to 10, characterized in that, in the rest position, the free end of the handle (5) is located virtually completely within the drive part (3).

12. Locking mechanism according to at least one of Claims 1 to 11, characterized in that the housing (1) is designed with two protrusions (la, 1b) which project from the underside of said housing, engage in clearances (2a, 2b) in the door leaf (2) and are intended for being secured on the door leaf (2).

13. Locking mechanism according to Claim 12, characterized in that a hook (1c), which engages behind the door leaf (2), is arranged in the region of one protrusion (1a), and a bearing bolt (1d) is arranged in the region of the other protrusion (1b), a rotatable locking plate (le) being arranged on said bearing bolt (1d).

## Revendications

1. Moyen de fermeture, en particulier pour des portes d'armoires électriques fabriquées en tôle, comprenant un boîtier (1) qui doit être monté sur la face extérieure de la porte et dans lequel est monté, avec une possibilité de rotation, un élément d'entraînement (3) qui peut être relié par un arbre d'entraînement au mécanisme d'une crémone (4a, 4b) et sur lequel une poignée (5) est montée avec la possibilité d'être sortie d'un évidement du boîtier (1) en basculant autour d'un axe perpendiculaire à l'axe de rotation de l'élément d'entraînement (3), la poignée (5) pouvant être verrouillée, pour en empêcher la sortie, dans une position de repos rentrée interdisant sa rotation, de préférence au moyen d'une serrure disposée dans le boîtier, caractérisé en ce que la poignée (5) est montée dans une gorge (3b), qui traverse l'élément d'entraînement (3) en diagonale, avec la possibilité de passer d'une position de travail sortie de l'élément d'entraînement (3) à une position de repos rentrée dans le boîtier (1), et est munie, à son extrémité intérieure, d'au moins un axe de retenue (6) qui forme l'axe de basculement et autour duquel la poignée (5) est maintenue sur l'élément d'entraînement (3) avec une possibilité de basculement dans la position de travail sortie.

2. Moyen de fermeture selon la revendication 1, caractérisé en ce que la poignée (5) peut être verrouillée dans sa position de repos rentrée dans le boîtier (1) par un verrou à sollicitation élastique(7, 12).

3. Moyen de fermeture selon la revendication 2, caractérisé en ce que le verrou (12) peut être libéré manuellement à l'aide d'un élément d'actionnement (lla) en saillie sur le boîtier (1).

4. Moyen de fermeture selon la revendication 3, caractérisé en ce que la face frontale de l'élément d'actionnement (11a) se trouve à l'intérieur de la surface du boîtier (1).

5. Moyen de fermeture selon la revendication 2, caractérisé en ce que le verrou (7) peut être libéré par une serrure (10) disposée dans le boîtier (1).

6. Moyen de fermeture selon la revendication 5, caractérisé en ce que la serrure (10) est disposée dans l'extrémité du boîtier (1) située à l'opposé de l'élément d'entraînement (3).

7. Moyen de fermeture selon au moins une des revendications 2 à 6, caractérisé en ce que le verrou (7, 12) est pourvu d'au moins une came engageante (7a, 12a) qui coopère avec l'axe de retenue (6) et qui est contiguë à un cran d'arrêt (7b, 12b).

8. Moyen de fermeture selon la revendication 7, caractérisé en ce que le verrou (12) coopère avec un évidement (5b) pratiqué dans la poignée (5) et traversé en son centre par l'axe de retenue (6).

9. Moyen de fermeture selon la revendication 7, caractérisé en ce que le verrou (7) présente la forme d'une fourchette et coopère avec les extrémités de l'axe de retenue (6) qui dépassent sur les côtés de la poignée (5).

10. Moyen de fermeture selon la revendication 9, caractérisé en ce que le verrou (7) en forme de fourchette est monté à la manière d'une bascule dans le boîtier (1) à l'intérieur d'un évidement entourant la serrure (10) en forme de U et est retenu sans risque de perte par un axe fileté (9) qui maintient la serrure (10) dans le boîtier (1).

11. Moyen de fermeture selon au moins une des revendications 1 à 10, caractérisé en ce qu'en position de repos l'extrémité libre de la poignée (5) se trouve presque entièrement à l'intérieur de l'élément d'entraînement (3).

12. Moyen de fermeture selon au moins une des revendications 1 à 11, caractérisé en ce que le boîtier (1) comporte deux parties en saillie (1a, 1b) qui dépassent de son dessous, pénètrent dans des évidements (2a, 2b) du vantail (2) de la porte et servant à le fixer sur le vantail (2) de la porte.

13. Moyen de fermeture selon la revendication 12, caractérisé en ce qu'un crochet (1c) s'engageant derrière le vantail (2) de la porte est disposé dans la zone de l'une des parties en saillie, (1a), et que, dans la zone de l'autre partie en saillie, (2b), est disposé un axe d'appui (1d) sur lequel est montée une patte de verrouillage tournante (1e).
